# EUROPÄISCHE PATENTSCHRIFT

(11) **EP 3 894 991 B1**
(45) Veröffentlichungstag und Bekanntmachung des Hinweises auf die Patenterteilung: **18.03.2026**
(21) Anmeldenummer: 19813290.4
(22) Anmeldetag: 29.11.2019
(51) Int. Cl.: G06F 3/01, G06F 3/04815, G10K 11/34, B60K 35/25

(54) **BENUTZERSCHNITTSTELLE EINES FAHRZEUGS UND VERFAHREN ZUR KONFIGURATION UND STEUERUNG DER BENUTZERSCHNITTSTELLE**
USER INTERFACE OF A VEHICLE, AND METHOD FOR CONFIGURING AND CONTROLLING THE USER INTERFACE
INTERFACE UTILISATEUR D'UN VÉHICULE ET PROCÉDÉ POUR LA CONFIGURATION ET LA COMMANDE DE L'INTERFACE UTILISATEUR

(30) Priorität: 14.12.2018 DE 102018221797
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: HIRSCH, Michael, 31226 Peine (DE); ROWOLD, Karsten, 38162 Cremlingen (DE)
(86) Internationale Anmeldenummer: PCT/EP2019/083038
(87) Internationale Veröffentlichungsnummer: WO 2020/120170

(56) Entgegenhaltungen:
- DE-A1- 102016 210 213
- US-A1- 2015 192 995
- US-A1- 2018 310 111
- ORESTIS GEORGIOU ET AL: "Haptic In-Vehicle Gesture Controls", PROCEEDINGS OF THE 9TH INTERNATIONAL CONFERENCE ON AUTOMOTIVE USER INTERFACES AND INTERACTIVE VEHICULAR APPLICATIONS ADJUNCT, AUTOMOTIVEUI '17, 27 September 2017 (2017-09-27), New York, New York, USA, pages 233 - 238, XP055663133, ISBN: 978-1-4503-5151-5, DOI: 10.1145/3131726.3132045
- INOUE SEKI ET AL: "Designing stationary airborne ultrasonic 3D tactile object", 2014 IEEE/SICE INTERNATIONAL SYMPOSIUM ON SYSTEM INTEGRATION, IEEE, 13 December 2014 (2014-12-13), pages 159 - 162, XP032731381, ISBN: 978-1-4799-6942-5, [retrieved on 20150130], DOI: 10.1109/SII.2014.7028030
- JASON GENG: "Three-dimensional display technologies", ADVANCES IN OPTICS AND PHOTONICS, vol. 5, no. 4, 22 November 2013 (2013-11-22), pages 456 - 535, XP055205716, DOI: 10.1364/AOP.5.000456

## Beschreibung

Die vorliegende Erfindung betrifft eine Benutzerschnittstelle eines Fahrzeugs.

Die vorliegende Erfindung betrifft darüber hinaus ein Verfahren zur Konfiguration und Steuerung einer Benutzerschnittstelle, deren Signalvorrichtung eine Vielzahl von Ultraschalllautsprechern zur Erzeugung eines haptisch wahrnehmbaren Bereiches innerhalb des Interaktionsraums aufweist.

Bei herkömmlichen Fahrzeugen sind Benutzerschnittstellen zur Bedienung von fahrzeugeigenen Peripheriegeräten insbesondere des Navigationsgerätes, des Infotainmentsystems, der Klimaanlage etc. in Fahrtrichtung ausgerichtet, so dass sie von einem in Fahrtrichtung sitzenden Fahrer bequem erreichbar sind. Beim autonomen Fahren, insbesondere in den derzeitigen Autonomiestufen 4 und 5, ist es allerdings nicht mehr zwingend erforderlich, dass der Fahrer in Fahrtrichtung ausgerichtet ist, sondern er kann seine Sitzposition auch um 180° in die Richtung der Fahrgastzelle (Fond) drehen, um sich dort beispielsweise mit anderen Fahrgästen auszutauschen. In dieser Position sind die herkömmlichen in Fahrtrichtung ausgerichteten Benutzerschnittstellen nicht mehr ohne weiteres zu erreichen.

Darüber hinaus sind Benutzerschnittstellen in Form von Displays bekannt, die innerhalb der Fahrgastzelle beispielsweise an den Türen, den Fenstern oder auf Tischflächen angeordnet sind, die zwar bei einer geänderten Ausrichtung des Fahrers erreichbar sind, die allerdings starr verbaut sind und nur eine streng display- und ortsgebundene Darstellung und Bedienung erlauben. Die Freiheitsgrade bezüglich der Darstellung der Bedienung sind daher beschränkt, da eine frei wählbare oder an die Position des Bedieners angepasste Anordnung der Benutzerschnittstelle nicht möglich ist.

In DE 10 2016 210 213 A1 wird eine Anwenderschnittstelle, ein Fortbewegungsmittel und ein Verfahren zur Interaktion zwischen dem Fortbewegungsmittel und einem Insassen des Fortbewegungsmittels vorgeschlagen. Insbesondere zur Interaktion wird offenbart, dass haptisch erfahrbare Ultraschallpulse mittels mehrerer Ultraschallwandler erzeugt werden sollen, deren modulierte Einzelsignale sich auf einer Oberfläche eines virtuellen Gegenstandes konstruktiv überlagern, sodass zumindest im Bereich einer Körperoberfläche eines Insassen eine Oberfläche des virtuellen Gegenstandes haptisch erfahrbar wird.

Aus den Veröffentlichungen "Haptic In-Vehicle Gesture Controls" (ORESTIS GEORGIOU ET AL, PROCEEDINGS OF THE 9TH INTERNATIONAL CONFERENCE ON AUTOMOTIVE USER INTERFACES AND INTERACTIVE VEHICULAR APPLICATIONS ADJUNCT, AUTOMOTIVEUI '17, ISBN 978-1-4503-5151-5, Seiten 233 - 238) und "Designing stationary airborne ultrasonic 3D tactile object" (INOUE SEKI ET AL, 2014 IEEE/SICE INTERNATIONAL SYMPOSIUM ON SYSTEM INTEGRATION, IEEE, ISBN 978-1-4799-6942-5, Seiten 159 - 162) sind weitere Vorschläge bekannt, wie mittels Ultraschallwandler Oberflächen von virtuellen Objekten spürbar sein können.

Demgegenüber wir in der Veröffentlichung "Three-dimensional display technologies" (JASON GENG, ADVANCES IN OPTICS AND PHOTONICS, (20131122), vol. 5, no. 4, doi:10.1364/AOP.5.000456, Seiten 456 - 535) beschrieben, wie virtuelle Objekte darstellbar sind.

In US 2018/310111 A1 wird dagegen beschrieben, wie mittels Mikrofonen, die von Benutzern getragen werden, die Position des Benutzers zu Ultraschall-Arrays verfolgt und die Vorrichtung zum Generieren von spürbaren haptischen Effekten kalibriert werden kann.

Hiervon ausgehend ist es die Aufgabe der vorliegenden Erfindung, eine Benutzerschnittstelle für ein Fahrzeug und ein Verfahren zur Konfiguration und Steuerung der Benutzerschnittstelle zu schaffen, die flexibel bedienbar ist und durch eine ortsungebundene Darstellung mehr Freiheitsgrade aufweist.

Diese Aufgabe wird zunächst durch die Benutzerschnittstelle nach Anspruch 1 gelöst.

Erfindungsgemäß besitzt die Benutzerschnittstelle eine Anzeigevorrichtung zur Erzeugung eines virtuellen Abbilds einer Bedienoberfläche, wobei die Anzeigevorrichtung ein 3D-Bilderzeugungssystem zur Erzeugung eines Realbildes einer Bedienoberfläche und eine Optik aufweist, die das Realbild der Bedienoberfläche in einen Interaktionsraum projiziert, der sich im Sichtbereich des Bedieners befindet und innerhalb einer Fahrgastzelle des Fahrzeugs angeordnet ist, eine Bedieneinheit zur Bedienung der virtuellen Bedienoberfläche mit einem Sensorsystem zur Erfassung und/oder Verfolgung von Bedienobjekten und eine Signalvorrichtung, die eingerichtet ist, um in Abhängigkeit der Bedienung der Bedienoberfläche wahrnehmbare Signale zu erzeugen, wobei die Signalvorrichtung eine Vorrichtung zur Erzeugung eines haptisch wahrnehmbaren Bereiches im Interaktionsraum der Bedienoberfläche ist, wobei die Vorrichtung zur Erzeugung eines haptisch wahrnehmbaren Bereiches innerhalb des Interaktionsraums eine Vielzahl von Ultraschalllautsprechern aufweist, deren Ultraschallsignale hierzu in Bezug auf Phase, Frequenz und Amplitude abstimmbar sind, wobei die Ultraschalllautsprecher einzeln oder gruppenweise mehrere Module bilden, die derart am Interaktionsraum angeordnet sind, dass
a) mindestens ein Ultraschalllautsprecher eines Moduls winklig zu mindestens einem Ultraschalllautsprecher eines anderen Moduls orientiert ist und/oder
b) mindestens ein Ultraschalllautsprecher eines Moduls von einer gemeinsamen Ebene anderer Ultraschalllautsprecher beabstandet ist, wobei
die Vorrichtung eine Steuereinheit mit einer hierauf enthaltenen Software und einer Programmierschnittstelle zur Konfiguration der Vorrichtung in Abhängigkeit der individuellen Positionen und Orientierungen der Module aufweist, wobei mehrere Ultraschallmikrofone jeweils unmittelbar an den Modulen angeordnet sind, wobei die Benutzerschnittstelle dazu eingerichtet ist, eine Selbstkalibrierung durchzuführen, wobei zur Konfiguration der Vorrichtung die Module nacheinander definierte Testsignale abgeben, die unmittelbar und/oder nach einer Reflexion an einem oder mehreren Reflexionskörpern von den Ultraschallmikrofonen registriert werden, so dass sich aus den Laufzeiten und/oder den Intensitäten der registrierten Testsignale die relativen Positionen und Orientierungen der Module und Ultraschallmikrofone ergeben.

Hierdurch wird eine flexible Benutzerschnittstelle vorgeschlagen, die in der Fahrgastzelle eines Fahrzeugs angeordnet ist und die ein virtuelles Abbild der Bedienoberfläche in einen Interaktionsraum projiziert, der innerhalb der Fahrgastzelle angeordnet ist. Die Bedieneinheit kann hierdurch von unterschiedlichen Positionen bequem erreicht und bedient werden, womit sie eine ortsungebundene Darstellung und Bedienung erlaubt, die sich an der Position des Bedieners orientiert.

Bevorzugte Ausgestaltungen der vorliegenden Erfindung, insbesondere der einzelnen Komponenten hiervon, werden nachfolgend und in den Unteransprüchen angegeben.

Nach einer ersten bevorzugten Ausführungsform ist vorgesehen, dass das 3D-Bilderzeugungssystem ein autostereoskopisches System ist, insbesondere ein 3D-Display mit Lentikularlinsen. Alternativ hierzu kann das 3D-Bilderzeugungssystem auch ein Lichtfelddisplay, ein Volumendisplay oder ein 3D-Display mit Parallaxbarriere sein. Die Optik der Anzeigevorrichtung bewirkt eine von der Oberfläche losgelöste und schwebende Wahrnehmung des Displays und kann dabei als Mehrspiegelplatte ausgebildet sein, insbesondere als eine Mehrspiegelplatte mit dihedralen Spiegeln.

Um unerwünschte Lichtreflektionen zu vermeiden, weist die Benutzerschnittstelle mindestens ein optisches Filterelement auf, das insbesondere als Polarisationsfilter ausgebildet sein kann. Konkret ist vorgesehen, dass die Anzeigevorrichtung ein solches optisches Filterelement besitzt, das unerwünschte Reflektionen aus dem System heraus verhindert, die beispielsweise von der Anzeigevorrichtung selbst hervorgerufen werden. Auch die Optik besitzt vorzugsweise ein optisches Filterelement, das ungewollte Lichtreflektionen von außen verhindert, die beispielsweise durch Sonneneinstrahlung oder Lampen innerhalb und/oder außerhalb der Fahrgastzelle hervorgerufen werden.

Im Rahmen der Anzeigevorrichtung ist nach einer weiteren bevorzugten Ausgestaltung der Erfindung ein Sensorsystem zur Erfassung der Gesichtsausrichtung bzw. der Blickrichtung des Bedieners zur virtuell dargestellten Bedienoberfläche vorgesehen, die beispielsweise kamerabasiert ausgestaltet sein kann. Hierdurch kann die virtuelle Bedienoberfläche aus verschiedenen Blickwinkeln betrachtet werden.

Um die von der Anzeigevorrichtung holografisch dargestellte Bedienoberfläche bedienen zu können, ist nach einer bevorzugten Ausgestaltung der Erfindung ein Sensorsystem vorgesehen, das eine ortsgenaue Erfassung und Verfolgung von Bedienobjekten innerhalb des Interaktionsraums ermöglicht. Als Bedienobjekte können anwendungsbezogen beispielsweise Hände, Finger oder auch Gesichter definiert werden. Das Sensorsystem weist nach einer bevorzugten Ausgestaltung der Erfindung mindestens einen Time-of-Flight-Sensor und/oder mindestens ein stereoskopisches Kamerasystem auf, die vorzugsweise im Infraroten Lichtspektrum arbeiten. Alternativ und/oder additiv kann das Sensorsystem auch eine akustische Kamera mit Ultraschalllautsprechern und Ultraschallmikrophonen aufweisen, auf die später noch näher eingegangen wird. Dabei hat sich insbesondere die Kombination unterschiedlicher Sensoren innerhalb des Sensorsystems als vorteilhaft erwiesen, um über eine geeignete Sensorverteilung ein größeres Bewegungsspektrum der Bedienobjekte zu erfassen. Beim Einsatz nur eines einzigen Sensors entstehen anderenfalls verdeckte Bereiche, die zu Fehlinterpretationen der Bedienung führen können. Durch die Integration eines solchen Sensorsystems zum Erkennen und/oder Verfolgen der Bedienobjekte im Interaktionsraum kann eine handbasierte Bedienung direkt mit der holografisch dargestellten Bedieneinheit erfolgen. Die Bedienung der Benutzerschnittstelle ist mithin oberflächenungebunden, d.h. dass keine direkte Berührung mit der Benutzerschnittstelle der Komponenten erfolgt.

Die Benutzerschnittstelle besitzt eine Signalvorrichtung, die eine etwaige Bedienung der virtuellen Bedienoberfläche signalisiert. Dabei ist in diesem Zusammenhang vorgesehen, dass die Signalvorrichtung eine Vorrichtung zur Erzeugung eines haptisch wahrnehmbaren Bereiches im Interaktionsraum der Bedienoberfläche ist.

Es ist vorgesehen, dass die Vorrichtung zur Erzeugung eines haptisch wahrnehmbaren Bereiches innerhalb des Interaktionsraums eine Vielzahl von Ultraschalllautsprechern aufweist, deren Ultraschallsignale hierzu in Bezug auf Phase, Frequenz und Amplitude abstimmbar sind, wobei die Ultraschallautsprecher einzeln oder gruppenweise mehrere Module bilden, die derart am Interaktionsraum angeordnet sind, dass
a) mindestens ein Ultraschalllautsprecher eines Moduls winklig zu mindestens einem Ultraschalllautsprecher eines andern Moduls orientiert ist und/oder
b) mindestens ein Ultraschalllautsprecher eines Moduls von einer gemeinsamen Ebene anderer Ultraschalllautsprecher beabstandet ist.

Durch die Positionierbarkeit und mithin die frei wählbare Position der einzelnen Module mit Ultraschalllautsprechern kann die Vorrichtung optimal an den vorhandenen Bauraum angepasst werden, weshalb eine Kollision der bevorzugten Positionen der bilderzeugenden Vorrichtungen und der tastsinnerzeugenden Vorrichtungen vermieden wird. Durch die beliebige, insbesondere winklige Anordnung einzelner Lautsprecher und/oder Module zueinander, erfolgt eine optimale dreidimensionale Ausrichtung der Module im Raum, die an beliebigen Positionen außerhalb des Interaktionsraums angeordnet und in gewünschter Orientierung ausgerichtet werden können. Damit kann ein individuelles Design der Vorrichtung zur Erzeugung des haptischen Feedbacks bei einer optimalen Ausnutzung des verfügbaren Bauraums realisiert werden. Ferner besitzt die Vorrichtung mit im wesentlichen frei positionierbaren Modulen einen minimalen Platzbedarf und insbesondere durch die Einstellbarkeit der Orientierung einzelner Module kann eine hohe Individualisierbarkeit der Stärke des haptischen Effekts erzielt werden.

Nach einer weiteren bevorzugten Ausgestaltung ist vorgesehen, dass die Ultraschalllautsprecher eines Moduls auf einer gemeinsamen Modulebenen angeordnet sind. Vorzugsweise weisen die Ultraschalllautsprecher eines Moduls dabei eine parallel zueinander ausgerichtete Orientierung auf. Die konkrete Ausgestaltung eines solchen Moduls ist zwar insbesondere in Bezug auf die Anzahl und Anordnung der Ultraschalllautsprecher nicht vorgegeben und im Wesentlichen beliebig, allerdings hat sich in der Praxis eine matrixförmige Anordnung der Ultraschalllautsprecher als vorteilhaft erwiesen. Insbesondere sind quadratische Matrixanordnungen von beispielsweise 4x4-Ultraschalllautsprechern bevorzugt.

Die Vorrichtung besitzt nach einer vorteilhaften Ausführungsform der Erfindung mindestens drei Module, deren Modulebenen winklig zueinander ausgerichtet sind. Hierdurch lassen sich die Module bauraumbedingt in optimaler Weise um den Interaktionsraum herum anordnen und auf den Interaktionsraum ausrichten.

Zur Konfiguration der Vorrichtung in Abhängigkeit der individuellen Position und Orientierung der Module und den hierauf angeordneten Ultraschalllautsprechern, ist eine Steuereinheit mit einer hierauf enthaltenen Software (Firmware) und einer Programmierschnittstelle (API) vorgesehen. Das Steuergerät berechnet in Abhängigkeit der individuellen Modulpositionen und Modulorientierungen die individuellen Ultraschallsignale in Bezug auf deren Phase, Frequenz und Amplituden, um an beliebigen Punkten im Interaktionsraum einen Bereich mit einem haptischen Feedback zu erzeugen. Ist dabei an mehreren Stellen ein solcher Bereich zu erzeugen, werden aus den vorhandenen Modulen geeignete Gruppen gebildet, die einem bestimmten Punkt zugeordnet werden und die an dieser Stelle das haptische Feedback erzeugen. Weil mit der vorliegenden dreidimensionalen Anordnung der Module der haptische Bereich aus drei unterschiedlichen Richtungen generiert wird, kann der haptische Bereich auch bei unterschiedlichen Handorientierungen gefühlt werden und etwaige Schattenbereiche innerhalb des Interaktionsraums können wirksam vermieden werden.

Die Steuerung der gesamten Vorrichtung und mithin der einzelnen Module ist durch die Steuereinheit möglich, so dass in diesem Fall einfache und daher preiswerte Module verwendet werden können. Um eine zeitlich korrekte Ansteuerung aller Module zu gewährleisten, müssen in diesem Fall alle Leitungslängen und Signallaufzeiten bekannt oder gleich lang sein.

Alternativ ist vorgesehen, dass jedes Modul einen separaten Mikrocontroller zur Konfiguration und/oder Ansteuerung der Ultraschalllautsprecher eines Moduls und zur Kommunikation mit der Steuereinheit aufweist. Hierdurch ergibt sich eine optimale Vernetzung der Module mit der als Hauptsteuergerät ausgebildeten Steuereinheit und die Kommunikation ist über ein echtzeitfähiges Bussystem möglich.

Es sind mehrere Ultraschallmikrofone vorgesehen, die unmittelbar an den Modulen angeordnet sind. Durch die Ultraschallmikrofone ergibt sich eine einfache automatische Konfigurierbarkeit der Vorrichtung und die Ultraschallmikrofone können darüber hinaus als dreidimensionale akustische Kamera verwendet werden, mit der Objekte innerhalb des Interaktionsraums erkannt, identifiziert und durch eine fortlaufende Positionsbestimmung verfolgt werden können. Hierdurch kann auf eine ansonsten erforderliche Bilderfassungsvorrichtung, beispielsweise in Form einer Stereokamera, verzichtet werden. Im Einzelnen wird hierauf bei der Beschreibung des erfindungsgemäßen Verfahrens näher eingegangen.

Die beschriebene Vorrichtung zur Erzeugung eines haptisch wahrnehmbaren Feedbacks kann aufgrund der flexiblen Anordnung der Ultraschalllautsprecher und der automatischen Konfigurierbarkeit in unterschiedlichen Fahrzeugmodellen mit unterschiedlichen Innenmaßen integriert werden.

Alternativ zu der beschriebenen Vorrichtung zur Erzeugung eines haptisch wahrnehmbaren Bereiches im Interaktionsraum der Bedienoberfläche kann die Signalvorrichtung auch eingerichtet sein, um bei der Bedienung der virtuellen Bedienoberfläche ein akustisches und/oder optisches Feedback zu erzeugen. Ein akustisches Feedback erfolgt im einfachsten Fall durch ein Geräusch, das von einem Lautsprecher oder dergleichen abgegeben wird. Das optische Feedback kann demgegenüber im einfachsten Fall durch eine Signalleuchte realisiert sein, die unmittelbar an der Benutzerschnittstelle angeordnet ist. Es ist auch vorgesehen, dass im Falle einer Bedienung der holografisch dargestellten Bedienoberfläche die Bedienoberfläche selbst ihre Darstellung ändert und beispielsweise die erfolgte Bedienung durch eine andere Farbe der Bedienoberfläche und/oder durch ein kurzzeitiges Aufleuchten anzeigt.

Eingangs wurde bereits angegeben, dass die vorliegende Erfindung darüber hinaus ein Verfahren zur Konfiguration und Steuerung einer Benutzerschnittstelle betrifft, deren Signalvorrichtung eine Vielzahl von Ultraschalllautsprechern zur Erzeugung eines haptisch wahrnehmbaren Bereiches innerhalb des Interaktionsraums aufweist.

Es ist erfindungsgemäß vorgesehen, dass zur Konfiguration der Vorrichtung die Module nacheinander definierte Testsignale abgeben, die unmittelbar und/oder nach einer Reflexion an einem oder mehreren Reflexionskörpern von Ultraschallmikrofonen registriert werden, die unmittelbar an den Modulen angeordnet sind, so dass sich aus den Laufzeiten und/oder den Intensitäten der registrierten Testsignale die relativen Positionen und Orientierungen der Module und Ultraschallmikrofone ergeben. Unter Berücksichtigung der so ermittelten und bekannten Positionen und Orientierungen der Module sowie der darauf angeordneten Ultraschallmikrofone werden die Ultraschallsignale der Module in Bezug auf ihre Phase, Frequenz und Amplitude in vorteilhafter Weise so abgestimmt, dass an beliebigen Stellen innerhalb des Interaktionsraumes haptisch wahrnehmbare Bereiche erzeugbar sind. Durch die Ultraschallmikrofone erfolgt eine Selbstkalibrierung der Vorrichtung, wodurch sich die Konfiguration der Vorrichtung vereinfacht, die im Wesentlichen automatisch ohne manuelle Vorgaben durchgeführt werden kann. Dabei steigt die Genauigkeit und die Auflösung der Konfiguration mit zunehmender Anzahl von Modulen und/oder Ultraschallmikrofonen.

Ergänzend zur Konfiguration der Vorrichtung können die Ultraschallmikrofone auch als akustische Kamera eingesetzt werden, mit der Objekte innerhalb des Interaktionsraums erkennbar, identifizierbar und durch eine fortlaufende Positionsbestimmung verfolgbar sind, so dass die akustische Kamera auch ein Teil des bereits angesprochenen Sensorsystems sein kann. Hierzu ist vorzugsweise vorgesehen, dass Reflexionen von ruhenden oder bewegten Objekten innerhalb des Interaktionsraums - wie beispielsweise einer Hand, die in den Interaktionsraum eingreift - von den Ultraschallmikrofonen registriert werden und aus den reflektierten Signalen die Position, die Form und die Bewegung des Objektes ermittelt wird. Zur Erkennung und Verfolgung der Objekte innerhalb des Interaktionsraums können die Ultraschallfrequenzen verwendet werden, die ohnehin zur Erzeugung des haptischen Effekts von den Ultraschalllautsprechern abgegeben werden. Alternativ können auch andere hiervon abweichende Frequenzen verwendet werden.

Schließlich ist nach einer bevorzugten Ausgestaltung des Verfahrens vorgesehen, dass sich Objekte über vorhandene Klassifizierungsalgorithmen bestimmen lassen, die die reflektierten Signale mit vorhandenen und objektbezogenen Datensätzen vergleichen und bei gegebener Übereinstimmung eine eindeutige Zuordnung des Objektes erlauben. Hierdurch ist auch eine spezifische und gezielte Anregung des Objekts innerhalb des Interaktionsraums möglich.

Konkrete Ausführungsformen der vorliegenden Erfindung werden nachfolgend anhand der Figuren erläutert. Diese zeigen:
- Fig. 1: eine Benutzerschnittstelle und
- Fig. 2: eine Vorrichtung zur Erzeugung eines haptisch wahrnehmbaren Bereiches innerhalb eines Interaktionsraumes.

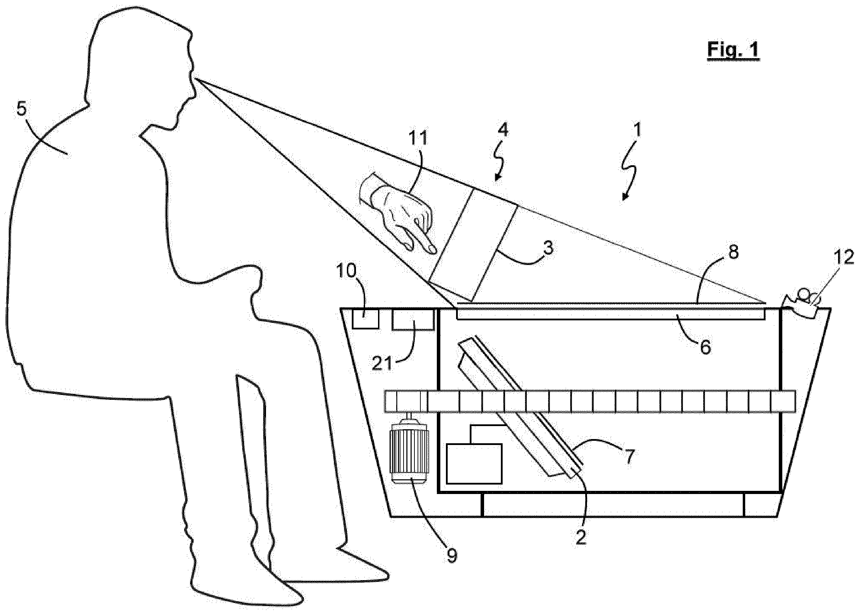

In Fig. 1 ist eine Benutzerschnittstelle 1 innerhalb einer (nicht gezeigten) Fahrgastzelle eines Fahrzeugs dargestellt. Die Benutzerschnittstelle 1 besitzt eine Anzeigevorrichtung 2 mit der ein virtuelles Abbild 3 einer Bedienoberfläche in einen Interaktionsraum 4 projizierbar ist, wo die Bedienoberfläche holografisch durch einen Bediener 5 erkennbar ist. Hierzu wird das virtuelle Abbild über eine optisch umlenkende Komponente 6, insbesondere eine Mehrspiegelplatte, in den Interaktionsraum 4 projiziert.

Die Anzeigevorrichtung 2 besitzt zur Vermeidung von internen Reflektionen innerhalb der Benutzerschnittstelle 1 einen Polarisationsfilter 7, der die Anzeigevorrichtung 2 abdeckt.

In ähnlicher Weise weist auch die dargestellte optische Komponente 6 einen Polarisationsfilter 8 auf, der unerwünschte äußere Reflektionen verhindert, die insbesondere durch die Sonneneinstrahlung und/oder externe Lichtquellen entstehen.

Optional besitzt die Benutzerschnittstelle 1 einen Verstellmechanismus 9, der die Anzeigevorrichtung 2 und/oder die optisch umlenkenden Komponenten 6 sowohl in ihren Winkel als auch in ihrer Position und Ausrichtung zum Bediener 5 manuell oder automatisch verstellt.

Die Benutzerschnittstelle 1 besitzt darüber hinaus eine Bedieneinheit zur Bedienung der virtuellen Bedienoberfläche, die ein Sensorsystem 10 zur Erfassung und/oder Verfolgung von Bedienobjekten 11 umfasst. Im dargestellten Ausführungsbeispiel ist das Sensorsystem 10 unterhalb des Interaktionsraums 4 angeordnet und erkennt eine sich im Interaktionsraum 4 bewegende Hand, die im vorliegenden Fall das Bedienobjekt 11 bildet. Durch die vorliegende Objekterkennung und Objektverfolgung erkennt die Benutzerschnittstelle 1, ob und ggf. welche Funktion mit der Benutzerschnittstelle 1 bedient werden soll und leitet die entsprechenden Befehle weiter.

Darüber hinaus besitzt die Benutzerschnittstelle 1 ein weiteres Sensorsystem 12 zur Erfassung der Gesichtsausrichtung bzw. der Objektorientierung des Bedieners 5 zur holografisch dargestellten Bedienoberfläche, die im dargestellten Ausführungsbeispiel kamerabasiert ausgestaltet sein kann. Insbesondere durch eine entsprechende Verknüpfung mit dem Verstellmechanismus 9 kann die virtuelle Bedienoberfläche aus verschiedenen Blickwinkeln betrachtet und bedient werden.

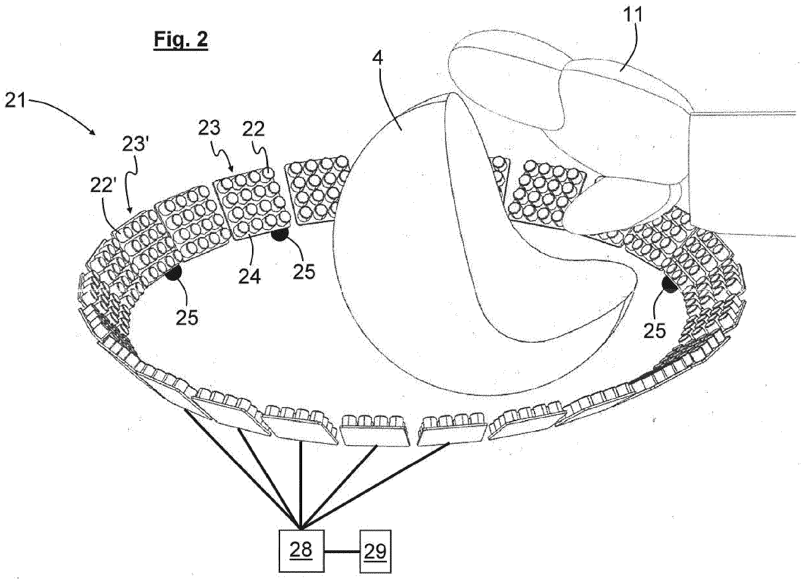

Um die erfolgte Bedienung für den Bediener 5 zu signalisieren, sind verschiedene Optionen vorgesehen. Neben den bereits angesprochenen Lichtsignalen kann die Benutzerschnittstelle 1 - wie in Fig. 1 dargestellt - eine Vorrichtung 21 zur Erzeugung eines haptischen Feedbacks aufweisen, die hierzu eine Vielzahl von Ultraschalllautsprechern aufweist. Diese Vorrichtung 21 ist nur beispielhaft in Fig. 1 unterhalb des Interaktionsraums 4 dargestellt. Prinzipiell können die Ultraschalllautsprecher im Wesentlichen beliebig innerhalb der Fahrgastzelle des Fahrzeugs angeordnet und ausgerichtet sein. Ein konkretes Ausführungsbeispiel hiervon sowie des diesbezüglichen Konfigurations- und Steuerverfahrens wird mit Bezug auf Fig. 2 erläutert.

Die dargestellte Vorrichtung 21 besitzt mehrere zylinderförmig dargestellte Ultraschalllautsprecher 22 ,22', die im vorliegenden Ausführungsbeispiel gruppenweise insgesamt 25 Module 23, 23' mit jeweils 16 Ultraschalllautsprechern 22, 22' bilden. Insgesamt besitzt die dargestellte Vorrichtung 400 Ultraschalllautsprecher 22, 22'. Die Ultraschalllautsprecher 22, 22' der einzelnen Module 23, 23' sind jeweils matrixförmig mit 4x4 Ultraschalllautsprechern 22, 22' auf einer gemeinsamen Modulplatte 24 angeordnet und parallel zueinander ausgerichtet. Die Modulplatten 24 sind eben ausgebildet und bilden Modulebenen. Die Module 23, 23' sind ringförmig und gegenüber einer Horizontalen winklig angeordnet, so dass mindestens ein Ultraschalllautsprecher 22 eines Moduls 23 winklig zu mindestens einem Ultraschalllautsprecher 22' eines anderen Moduls 23' orientiert ist und von einer gemeinsamen Ebene anderer Ultraschalllautsprecher beabstandet ist. Hierdurch sind die Module 23, 23' und die Ultraschalllautsprecher 22, 22' im Wesentlichen frei positionierbar und im gezeigten Ausführungsbeispiel auf die Mitte des darüber angeordneten Interaktionsraums 4 ausgerichtet.

Zur Konfiguration und Steuerung der Vorrichtung 21 besitzen die Module 23, 23' zumindest teilweise Ultraschallmikrofone 25, wobei bei der vorliegenden Ausführungsform nur drei Ultraschallmikrofone 25 beispielhaft dargestellt sind. Um die Genauigkeit des Konfigurations- und Steuerverfahrens zu erhöhen, besitzen vorzugsweise alle Module 23, 23' mindestens ein Ultraschallmikrofon 25. Die Ultraschallmikrofone 25 empfangen zur Konfiguration Testsignale, die nacheinander von den Modulen 23, 23' abgegeben werden und die ggf. an einem Reflexionskörper (nicht dargestellt) reflektiert werden. Über die aufgenommenen Signale, insbesondere deren Frequenzen und Amplituden, lassen sich die Positionen und Orientierungen der einzelnen Module 23, 23' eindeutig bestimmen, so dass die Ultraschallsignale in Bezug auf deren Phase, Frequenz und Amplitude so einstellbar sind, dass an beliebigen Positionen innerhalb des Interaktionsraums 4 Punkte mit haptisch wahrnehmbaren Bereichen erzeugbar sind. In der Figur ist der Interaktionsraum 4 mit einem möglichen haptischen Feedback im Wesentlichen teilkugelförmig dargestellt, wobei die Form des Interaktionsraums 4 auch von der konkreten und frei wählbaren Anordnung der Module 23, 23' abhängt.

Im Interaktionsraum 4 selbst lassen sich an beliebigen Positionen haptisch fühlbare Bereiche erzeugen, die durch eine Person mit einer Hand 11 wahrgenommen werden können, die in den Interaktionsraum 4 eindringt. Die Reflexionen der Ultraschallsignale an der Hand 11 - oder einem anderen Objekt - werden durch die Ultraschallmikrofone 25 registriert, so dass sich aus den reflektierten Signalen die Bewegung der Hand 11 im Interaktionsraum 4 ermitteln lässt.

Zur Steuerung und Konfiguration der Vorrichtung 21 sind eine Steuereinheit 28 und eine Programmierschnittstelle 29 vorgesehen. Die Steuereinheit 28 ist im dargestellten Ausführungsbeispiel derart mit der Vorrichtung 21 verbunden, dass die Steuersignale unmittelbar von der Steuereinheit 28 zu den einzelnen Modulen 23, 23' gesendet werden. Alternativ können die Module 23, 23' auch separate Mikrocontroller (nicht dargestellt) aufweisen, die zur Steuerung mit den Modulen 23, 23' einerseits und der Steuereinheit 28 andererseits verbunden sind.

Um alle Komponenten der vorliegenden Benutzerschnittstelle 1 zu steuern und aufeinander abzustimmen, besitzt die Benutzerschnittelle eine weitere Recheneinheit 13 (siehe Fig. 1), die mit allen zu steuernden Komponenten verbunden ist.

### Bezugszeichenliste

- 1: Benutzerschnittstelle
- 2: Anzeigevorrichtung
- 3: virtuelles Abbild einer Bedienoberfläche
- 4: Interaktionsraum
- 5: Bediener
- 6: optisch umlenkende Komponente
- 7: Polarisationsfilter
- 8: Polarisationsfilter
- 9: Verstellmechanismus
- 10: Sensorsystem
- 11: Bedienobjekt
- 12: Sensorsystem
- 13: Recheneinheit
- 21: Vorrichtung zur Erzeugung eines haptischen Feedbacks
- 22, 22': Ultraschalllautsprecher
- 23, 23': Module
- 24: Modulplatte
- 25: Ultraschallmikrophone
- 28: Steuereinheit
- 29: Programmierschnittstelle

## Patentansprüche

1. Benutzerschnittstelle eines Fahrzeugs mit
a) einer Anzeigevorrichtung (2) zur Erzeugung eines virtuellen Abbilds (3) einer Bedienoberfläche, wobei die Anzeigevorrichtung (2) ein 3D-Bilderzeugungssystem zur Erzeugung eines Realbildes einer Bedienoberfläche und eine Optik (6) aufweist, die das Realbild der Bedienoberfläche in einen Interaktionsraum (4) projiziert, der sich im Sichtbereich eines Bedieners (5) befindet und innerhalb einer Fahrgastzelle des Fahrzeugs angeordnet ist und
b) einer Bedieneinheit zur Bedienung der virtuellen Bedienoberfläche mit einem Sensorsystem (10) zur Erfassung und/oder Verfolgung von Bedienobjekten (11) und
c) einer Signalvorrichtung, die eingerichtet ist, um in Abhängigkeit der Bedienung der Bedienoberfläche wahrnehmbare Signale zu erzeugen, wobei die Signalvorrichtung eine Vorrichtung (21) zur Erzeugung eines haptisch wahrnehmbaren Bereiches im Interaktionsraum (4) der Bedienoberfläche ist, wobei die Vorrichtung (21) zur Erzeugung eines haptisch wahrnehmbaren Bereiches innerhalb des Interaktionsraums (4) eine Vielzahl von Ultraschalllautsprechern (22, 22') aufweist, deren Ultraschallsignale hierzu in Bezug auf Phase, Frequenz und Amplitude abstimmbar sind, wobei die Ultraschalllautsprecher (22, 22') einzeln oder gruppenweise mehrere Module (23, 23') bilden, die derart am Interaktionsraum (4) angeordnet sind, dass
1. mindestens ein Ultraschalllautsprecher (22) eines Moduls (23) winklig zu mindestens einem Ultraschalllautsprecher (22') eines anderen Moduls (23') orientiert ist und/oder
2. mindestens ein Ultraschalllautsprecher (22) eines Moduls (23) von einer gemeinsamen Ebene anderer Ultraschalllautsprecher (22') beabstandet ist, wobei
d) die Vorrichtung (21) eine Steuereinheit (28) mit einer hierauf enthaltenen Software und einer Programmierschnittstelle zur Konfiguration der Vorrichtung (21) in Abhängigkeit der individuellen Positionen und Orientierungen der Module (23, 23') aufweist, wobei mehrere Ultraschallmikrofone (25) jeweils unmittelbar an den Modulen (23, 23') angeordnet sind, wobei
e) die Benutzerschnittstelle dazu eingerichtet ist, eine Selbstkalibrierung durchzuführen, wobei zur Konfiguration der Vorrichtung (21) die Module nacheinander definierte Testsignale abgeben, die unmittelbar und/oder nach einer Reflexion an einem oder mehreren Reflexionskörpern von den Ultraschallmikrofonen (25) registriert werden, so dass sich aus den Laufzeiten und/oder den Intensitäten der registrierten Testsignale die relativen Positionen und Orientierungen der Module (23, 23') und Ultraschallmikrofone (25) ergeben.

2. Benutzerschnittstelle nach Anspruch 2, **dadurch gekennzeichnet, dass** das 3D-Bilderzeugungssystem ein autostereoskopisches System ist, insbesondere ein 3D-Display mit Lentikularlinsen.

3. Benutzerschnittstelle nach einem der Ansprüche 1 oder 2, **dadurch gekennzeichnet, dass** die Optik (6) eine Mehrspiegelplatte ist.

4. Benutzerschnittstelle nach einem der Ansprüche 1 bis 3, **dadurch gekennzeichnet, dass** die Benutzerschnittstelle (1) zur Vermeidung von Reflektionen mindestens ein optisches Filterelement aufweist, insbesondere mindestens einen Polarisationsfilter (7, 8).

5. Benutzerschnittstelle nach Anspruch 4, **dadurch gekennzeichnet, dass** die Optik (6) der Benutzerschnittstelle (1) und/oder Anzeigevorrichtung (2) jeweils mindestens ein optisches Filterelement (7, 8) besitzt.

6. Benutzerschnittstelle nach einem der Ansprüche 1 bis 5, **dadurch gekennzeichnet, dass** das Sensorsystem (10) einen Time-of-Flight-Sensor und/oder ein stereoskopisches Kamerasystem aufweist.

7. Benutzerschnittstelle nach einem der vorhergehenden Ansprüche, **dadurch gekennzeichnet, dass** die Ultraschalllautsprecher (22, 22') eines Moduls (23, 23') auf einer gemeinsamen Modulebenen angeordnet sind.

8. Benutzerschnittstelle nach einem der vorhergehenden Ansprüche, **dadurch gekennzeichnet, dass** die Ultraschalllautsprecher (22, 22') eines Moduls (23, 23') eine parallel zueinander ausgerichtete Orientierung aufweisen.

9. Benutzerschnittstelle nach einem der vorhergehenden Ansprüche, **dadurch gekennzeichnet, dass** die Ultraschalllautsprecher (22, 22') eines Moduls (23, 23') als Matrix, insbesondere als quadratische Matrix, angeordnet sind.

10. Benutzerschnittstelle nach einem der vorhergehenden Ansprüche, **dadurch gekennzeichnet, dass** die Vorrichtung (21) mindestens drei Module (23, 23') aufweist, deren Modulebenen winklig zueinander ausgerichtet sind.

11. Benutzerschnittstelle nach einem der vorhergehenden Ansprüche, **dadurch gekennzeichnet, dass** jedes Modul (23, 23') einen separaten Mikrocontroller zur Konfiguration und/oder Ansteuerung der Ultraschalllautsprecher (22, 22') eines Moduls (23, 23') und zur Kommunikation mit der Steuereinheit (28) aufweist.

12. Benutzerschnittstelle nach einem der vorhergehenden Ansprüche, **dadurch gekennzeichnet, dass** die Signalvorrichtung eingerichtet ist, um bei der Bedienung der virtuellen Bedienoberfläche ein akustisches und/oder optisches Feedback zu erzeugen.

13. Verfahren zur Konfiguration und Steuerung einer Benutzerschnittstelle nach einem der Ansprüche 1 bis 12, **dadurch gekennzeichnet, dass** zur Konfiguration der Vorrichtung (21) die Module (23, 23') nacheinander definierte Testsignale abgeben, die unmittelbar und/oder nach einer Reflexion an einem oder mehreren Reflexionskörpern von Ultraschallmikrofonen (25) registriert werden, die unmittelbar an den Modulen (23, 23') angeordnet sind, so dass sich aus den Laufzeiten und/oder den Intensitäten der registrierten Testsignale die relativen Positionen und Orientierungen der Module (23, 23') und Ultraschallmikrofone (25) ergeben, wobei bei bekannten Positionen und Orientierungen der Module (23, 23') und Ultraschallmikrofone (25) die Ultraschallsignale der Module (23, 23') in Bezug auf ihre Phase, Frequenz und Amplitude so abgestimmt werden, dass an beliebigen Stellen innerhalb des Interaktionsraumes (4) haptisch wahrnehmbare Bereiche erzeugbar sind.

14. Verfahren nach Anspruch 13, **dadurch gekennzeichnet, dass** Reflexionen von ruhenden oder bewegten Objekten innerhalb des Interaktionsraums (4) von den Ultraschallmikrofonen (25) registriert werden und aus den reflektierten Signalen die Position, die Form und/oder die Bewegung des Objektes ermittelt wird.

## Claims

1. User interface of a vehicle, comprising
a) a display device (2) for generating a virtual image (3) of an operation interface, wherein the display device (2) has a 3D-image generation system for generating a real image of an operation interface, and optics (6) that project the real image of the operation interface into an interaction space (4) located in the field of vision of an operator (5) and arranged within a passenger compartment of the vehicle, and
b) an operation unit for operating the virtual operation interface, comprising a sensor system (10) for detecting and/or tracking operation objects (11), and
c) a signaling device set up to generate perceptible signals on the basis of the operation of the operation interface, wherein the signaling device is a device (21) for generating a haptically perceptible region in the interaction space (4) of the operation interface, wherein in order to generate a haptically perceptible region within the interaction space (4) the device (21) has a plurality of ultrasonic loudspeakers (22, 22'), the ultrasonic signals of which are tunable for this purpose with respect to phase, frequency and amplitude, wherein the ultrasonic loudspeakers (22, 22') individually or in groups form a plurality of modules (23, 23') which are arranged at the interaction space (4) in such a way that
1. at least one ultrasonic loudspeaker (22) of a module (23) is oriented at an angle to at least one ultrasonic loudspeaker (22') of another module (23') and/or
2. at least one ultrasonic loudspeaker (22) of a module (23) is spaced apart from a plane common to other ultrasonic loudspeakers (22'), wherein
d) the device (21) has a control unit (28) with software contained therein and with a programming interface for configuring the device (21) on the basis of the individual positions and orientations of the modules (23, 23'), wherein a plurality of ultrasonic microphones (25) are each arranged directly on the modules (23, 23'), wherein
e) the user interface is set up to perform a self-calibration operation, wherein in order to configure the device (21) the modules successively emit defined test signals which are registered by the ultrasonic microphones (25) immediately and/or after reflection on one or more reflection bodies, with the result that the relative positions and orientations of the modules (23, 23') and ultrasonic microphones (25) are determined from the transit times and/or the intensities of the registered test signals.

2. User interface according to claim 2, **characterized in that** the 3D-image generation system is an autostereoscopic system, in particular a 3D display with lenticular lenses.

3. User interface according to either of claims 1 and 2, **characterized in that** the optics (6) are a multi-mirror panel.

4. User interface according to any of claims 1 to 3, **characterized in that** in order to avoid reflections the user interface (1) has at least one optical filter element, in particular at least one polarization filter (7, 8).

5. User interface according to claim 4, **characterized in that** the display device (2) and/or the optics (6) of the user interface (1) each have at least one optical filter element (7, 8).

6. User interface according to any of claims 1 to 5, **characterized in that** the sensor system (10) has a time-of-flight sensor and/or a stereoscopic camera system.

7. User interface according to any of the preceding claims,
**characterized in that** the ultrasonic loudspeakers (22, 22') of a module (23, 23') are arranged on a common module plane.

8. User interface according to any of the preceding claims,
**characterized in that** the ultrasonic loudspeakers (22, 22') of a module (23, 23') have a mutually parallel orientation.

9. User interface according to any of the preceding claims,
**characterized in that** the ultrasonic loudspeakers (22, 22') of a module (23, 23') are arranged as a matrix, in particular as a square matrix.

10. User interface according to any of the preceding claims,
**characterized in that** the device (21) has at least three modules (23, 23'), the module planes of which are oriented at an angle to each other.

11. User interface according to any of the preceding claims,
**characterized in that** each module (23, 23') has a separate microcontroller for configuring and/or controlling the ultrasonic loudspeakers (22, 22') of a module (23, 23') and for communicating with the control unit (28).

12. User interface according to any of the preceding claims,
**characterized in that** the signaling device is set up to generate acoustic and/or visual feedback during operation of the virtual operation interface.

13. Method for configuring and controlling a user interface according to any of claims 1 to 12, **characterized in that** in order to configure the device (21) the modules (23, 23') successively emit defined test signals which are registered by ultrasonic microphones (25) immediately and/or after reflection on one or more reflection bodies, which ultrasonic microphones are arranged directly on the modules (23, 23'), with the result that the relative positions and orientations of the modules (23, 23') and ultrasonic microphones (25) are determined from the transit times and/or the intensities of the registered test signals, wherein, for known positions and orientations of the modules (23, 23') and ultrasonic microphones (25), the ultrasonic signals of the modules (23, 23') are tuned with respect to their phase, frequency and amplitude such that haptically perceptible regions can be generated at any point within the interaction space (4).

14. Method according to claim 13, **characterized in that** reflections from stationary or moving objects within the interaction space (4) are registered by the ultrasonic microphones (25) and the position, the shape and/or the movement of the object is ascertained from the reflected signals.

## Revendications

1. Interface utilisateur d'un véhicule comportant
a) un dispositif d'affichage (2) pour générer une image virtuelle (3) d'une surface d'exploitation, dans laquelle le dispositif d'affichage (2) présente un système de génération d'images 3D pour générer une image réelle d'une surface d'exploitation et une optique (6) qui projette l'image réelle de la surface d'exploitation dans une zone d'interaction (4) qui se trouve dans le champ de vision d'un opérateur (5) et qui est agencé à l'intérieur d'un habitacle du véhicule et
b) une unité d'exploitation pour l'exploitation de la surface d'exploitation virtuelle comportant un système de capteurs (10) pour reconnaître et/ou suivre des objets d'exploitation (11) et
c) un dispositif de signalisation qui est conçu pour générer des signaux perceptibles en fonction de la manipulation de la surface d'exploitation, dans laquelle le dispositif de signalisation est un dispositif (21) pour générer une zone perceptible haptiquement dans l'espace d'interaction (4) de la surface d'exploitation, dans laquelle le dispositif (21) pour générer une zone perceptible haptiquement à l'intérieur de l'espace d'interaction (4) présente une pluralité de haut-parleurs à ultrasons (22, 22') dont les signaux ultrasonores peuvent être accordés à cet effet en ce qui concerne la phase, la fréquence et l'amplitude, dans laquelle les haut-parleurs à ultrasons (22, 22') forment individuellement ou par groupes plusieurs modules (23, 23') qui sont agencés sur l'espace d'interaction (4) de telle sorte que
1. au moins un haut-parleur à ultrasons (22) d'un module (23) est orienté selon un angle par rapport à au moins un haut-parleur à ultrasons (22') d'un autre module (23') et/ou
2. au moins un haut-parleur à ultrasons (22) d'un module (23) est espacé d'un plan commun d'autres haut-parleurs à ultrasons (22'), dans laquelle
d) le dispositif (21) présente une unité de commande (28) comportant un logiciel contenu sur celle-ci et une interface de programmation pour la configuration du dispositif (21) en fonction des positions et orientations individuelles des modules (23, 23'), dans laquelle plusieurs microphones à ultrasons (25) sont agencés respectivement directement sur les modules (23, 23'), dans laquelle
e) l'interface utilisateur est conçue pour réaliser un auto-étalonnage, dans laquelle, pour la configuration du dispositif (21), les modules émettent des signaux de test définis successivement, qui sont enregistrés par les microphones à ultrasons (25) immédiatement et/ou après une réflexion sur un ou plusieurs corps réfléchissants, de sorte que les positions et orientations relatives des modules (23, 23') et des microphones à ultrasons (25) résultent des temps de parcours et/ou des intensités des signaux de test enregistrés.

2. Interface utilisateur selon la revendication 2, **caractérisée en ce que** le système de génération d'images 3D est un système autostéréoscopique, en particulier un affichage 3D comportant des lentilles lenticulaires.

3. Interface utilisateur selon l'une des revendications 1 ou 2,
**caractérisée en ce que** l'optique (6) est une plaque à miroirs multiples.

4. Interface utilisateur selon l'une des revendications 1 à 3,
**caractérisée en ce que** l'interface utilisateur (1) présente au moins un élément de filtre optique pour éviter les réflexions, en particulier au moins un filtre de polarisation (7, 8).

5. Interface utilisateur selon la revendication 4, **caractérisée en ce que** l'optique (6) de l'interface utilisateur (1) et/ou du dispositif d'affichage (2) possède respectivement au moins un élément de filtre optique (7, 8).

6. Interface utilisateur selon l'une des revendications 1 à 5,
**caractérisée en ce que** le système de capteurs (10) présente un capteur de temps de vol et/ou un système de caméra stéréoscopique.

7. Interface utilisateur selon l'une des revendications précédentes, **caractérisée en ce que** les haut-parleurs à ultrasons (22, 22') d'un module (23, 23') sont agencés sur un plan de module commun.

8. Interface utilisateur selon l'une des revendications précédentes, **caractérisée en ce que** les haut-parleurs à ultrasons (22, 22') d'un module (23, 23') présentent une orientation dirigée parallèlement les uns vers les autres.

9. Interface utilisateur selon l'une des revendications précédentes, **caractérisée en ce que** les haut-parleurs à ultrasons (22, 22') d'un module (23, 23') sont agencés sous forme de matrice, en particulier de matrice carrée.

10. Interface utilisateur selon l'une des revendications précédentes, **caractérisée en ce que** le dispositif (21) présente au moins trois modules (23, 23') dont les plans de modules sont dirigés selon un angle les uns par rapport aux autres.

11. Interface utilisateur selon l'une des revendications précédentes, **caractérisée en ce que** chaque module (23, 23') présente un microcontrôleur séparé pour configurer et/ou commander les haut-parleurs à ultrasons (22, 22') d'un module (23, 23') et pour communiquer avec l'unité de commande (28).

12. Interface utilisateur selon l'une des revendications précédentes, **caractérisée en ce que** le dispositif de signalisation est conçu pour générer un retour d'information sonore et/ou visuel lors de l'exploitation de la surface d'exploitation virtuelle.

13. Procédé de configuration et de commande d'une interface utilisateur selon l'une des revendications 1 à 12, **caractérisé en ce que** pour configurer le dispositif (21), les modules (23, 23') émettent des signaux de test définis successivement qui sont enregistrés directement et/ou après une réflexion sur un ou plusieurs corps réfléchissants de microphones à ultrasons (25), qui sont agencés directement sur les modules (23, 23'), de sorte que les positions et orientations relatives des modules (23, 23') et des microphones à ultrasons (25) résultent des temps de parcours et/ou des intensités des signaux de test enregistrés, dans lequel lorsque les positions et orientations des modules (23, 23') et des microphones à ultrasons (25) sont connues, les signaux ultrasonores des modules (23, 23') sont accordés en ce qui concerne leur phase, leur fréquence et leur amplitude de telle sorte que des zones perceptibles haptiquement peuvent être générées à des endroits quelconques à l'intérieur de l'espace d'interaction (4).

14. Procédé selon la revendication 13, **caractérisé en ce que** des réflexions d'objets immobiles ou en mouvement à l'intérieur de l'espace d'interaction (4) sont enregistrées par les microphones à ultrasons (25) et la position, la forme et/ou le mouvement de l'objet sont déterminés à partir des signaux réfléchis.
